# EUROPÄISCHE PATENTANMELDUNG

(11) **EP 4 245 135 A1**
(43) Veröffentlichungstag der Anmeldung: **20.09.2023**
(21) Anmeldenummer: 22162596.5
(22) Anmeldetag: 16.03.2022
(51) Int. Cl.: A01M 7/00

(54) **DURCHFÜHREN UND DOKUMENTIEREN EINER APPLIKATION VON PFLANZENSCHUTZMITTEL**

(71) Anmelder: Bayer AG, 51373 Leverkusen (DE); AI.Land GmbH, 47906 Kempen (DE)
(72) Erfinder: Tempel, Matthias, 50935 Köln (DE); Roth, Alexander, 51429 Bergisch Gladbach (DE); La Tona, Giuseppe, 51381 Leverkusen (DE); Franko, Joseph, 47906 Kempen (DE)
(74) Vertreter: BIP Patents

(57) **Zusammenfassung**

Die vorliegende Erfindung betrifft das technische Gebiet der Applikation von Pflanzenschutzmittel. Gegenstände der vorliegenden Erfindung sind eine Vorrichtung und ein Verfahren zur automatisierten und präzisen Applikation eines oder mehrerer Pflanzenschutzmittel auf ein Zielobjekt und zur Dokumentation der Applikation.

## Beschreibung

### Technisches Gebiet

Die vorliegende Erfindung betrifft das technische Gebiet der Applikation von Pflanzenschutzmittel. Gegenstände der vorliegenden Erfindung sind eine Vorrichtung und ein Verfahren zur automatisierten und präzisen Applikation eines oder mehrerer Pflanzenschutzmittel auf ein Zielobjekt und zur Dokumentation der Applikation.

### Einleitung

Pflanzenschutzmittel werden weltweit eingesetzt, um Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler).

Zunehmend werden autonome Systeme eingesetzt, die Kulturpflanzen und/oder unerwünschte Begleitpflanzen automatisch erkennen und gezielt Pflanzenschutzmittel applizieren.

WO2017/178666A1 offenbart beispielsweise einen Satz autonomer Vorrichtungen, die mit Hilfe einer Kamera Bildaufnahmen in einem Feld für Kulturpflanzen erzeugen und die erzeugten Bildaufnahmen einem künstlichen neuronalen Netzwerk zuführen, das trainiert wurde, Wildpflanzen von Kulturpflanzen zu unterscheiden. Die Informationen über die jeweils vorliegende Pflanze werden genutzt, um gezielt Pflanzenschutzmittel zu applizieren.

WO2021/144785A1 offenbart ein System zur biologischen Echtzeit-Erfassung und -Behandlung eines vordefinierten Zustands von Pflanzen, umfassend ein Steuersystem, das auf Basis von Bildaufnahmen vordefinierte phänotypische Merkmale von Pflanzen erkennt, und eine Ausführungseinheit, die konfiguriert ist, den vordefinierten Zustand der Pflanzen zu behandeln. Die Identifizierung von Pflanzen und/oder Pflanzenzuständen geht mit einer gezielten Behandlung einzelner Pflanzen einher.

Die Systeme, die heute auf dem Markt sind, geben jedoch keine Gewährleistung dafür, dass Pflanzenschutzmittel nur dort hingelangt, wo es seine Wirkung entfachen soll, und umgebende Bereiche ausspart und somit in der geringsten Menge, die trotzdem noch die gewünschte Wirkung erzielt.

Im ökologischen Landbau wird versucht, auf Pflanzenschutzmittel weitestgehend zu verzichten. Das Vorbeugen von Krankheiten und Schädlingen steht im Vordergrund. Alle Kulturmaßnahmen wie Fruchtfolge, Düngung, Bodenbearbeitung oder Art- und Sortenwahl sind darauf ausgerichtet, die Ausbreitung von Schaderregern zu begrenzen.

Treten trotz dieser Vorbeugungsmaßnahmen Krankheiten oder Schädlinge auf, kann im ökologischen Landbau nur auf eine begrenzte Auswahl von Pflanzenschutzmitteln zurückgegriffen werden. Die Verwendung von Pflanzenschutzmitteln ist in den EU-Rechtsvorschriften für den ökologischen Landbau geregelt: "Bei einer festgestellten Bedrohung der Kulturen dürfen lediglich solche Pflanzenschutzmittel eingesetzt werden, die nach Artikel 16 für die Verwendung in der ökologischen/biologischen Produktion zugelassen wurden" (Artikel 12 der Verordnung 834/2007).

Mit der Verordnung 834/2007 verfolgt die EU das Ziel, den Eintrag von Pflanzenschutzmitteln in die Umwelt zu minimieren, um ungewollte Folgeeffekte zu vermeiden. Die Verordnung beruht auf der Überzeugung, dass eine Applikation von Pflanzenschutzmittel unter realen Bedingungen im Feld zwangsläufig zu einer Kontamination der Umwelt mit Pflanzenschutzmittel führt.

Ausgehend vom beschriebenen Stand der Technik stellt sich die Aufgabe, den Einsatz von Pflanzenschutzmittel so zu gestalten, dass das Pflanzenschutzmittel nachweislich in einer möglichst geringen Menge nur dort appliziert wird, wo es vorgesehen ist.

### Zusammenfassung der vorliegenden Erfindung

Die vorliegende Erfindung stellt Mittel bereit, mit denen zum einen Pflanzenschutzmittel gezielt und in einer möglichst geringen Menge, in der das Pflanzenschutzmittel immer noch seine Wirkung entfalten kann, auf ein Zielobjekt appliziert werden kann und zum anderen ein Nachweis erbracht wird, dass der Einsatz von Pflanzenschutzmittel auf das Zielobjekt beschränkt ist.

Ein erster Gegenstand der vorliegenden Erfindung ist ein Verfahren umfassend die Schritte:
- Erzeugen einer ersten Bildaufnahme von einem Zielobjekt,
- Identifizieren des Zielobjekts auf Basis der ersten Bildaufnahme,
- Bestimmung der notwendigen Applikationsmenge basierend auf Eigenschaften des Zielobjektes
- Ermitteln einer Zielregion auf Basis der ersten Bildaufnahme und/oder auf Basis einer zweiten Bildaufnahme,
- Applizieren einer Menge eines Pflanzenschutzmittels auf die Zielregion mit Hilfe einer Dosiereinheit,
- Erzeugen einer dritten Bildaufnahme, wobei die dritte Bildaufnahme das auf die Zielregion applizierte Pflanzenschutzmittel zeigt,
- Erzeugen eines Datensatzes umfassend
   ∘ die erste und/oder die zweite Bildaufnahme,
   ∘ eine Information über das ermittelte Zielobjekt, und
   ∘ die dritte Bildaufnahme,
- Ausgeben und/oder Speichern des Datensatzes und/oder Übermitteln des Datensatzes an ein Computersystem.

Ein weiterer Gegenstand der vorliegenden Erfindung ist eine Vorrichtung umfassend,
- eine Steuer- und Recheneinheit,
- mindestens eine Bildaufnahmeeinheit,
- eine Dosiereinheit, und
- einen Datenspeicher und/oder eine Sendeeinheit,
wobei die Steuer- und Recheneinheit konfiguriert ist,
- von der mindestens einen Bildaufnahmeeinheit eine erste Bildaufnahme zu empfangen,
- ein Zielobjekt in der ersten Bildaufnahme zu identifizieren,
- optional eine zweite Bildaufnahme von der mindestens einen Bildaufnahmeeinheit zu empfangen,
- eine Zielregion auf Basis der ersten und/oder zweiten Bildaufnahme zu ermitteln,
- die Dosiereinheit zu veranlassen, eine Menge eines Pflanzenschutzmittels auf die Zielregion zu applizieren,
- die mindestens eine Bildaufnahmeeinheit zu veranlassen, eine dritte Bildaufnahme zu erzeugen, wobei die dritte Bildaufnahme das auf die Zielregion applizierte Pflanzenschutzmittel zeigt,
- einen Datensatz zu erzeugen, wobei der Datensatz
   ∘ die erste und/oder die zweite Bildaufnahme,
   ∘ eine Information über das ermittelte Zielobjekt, und
   ∘ die zweite Bildaufnahme
   umfasst, und
- den Datensatz in dem Datenspeicher zu speichern und/oder die Sendeeinheit zu veranlassen, den Datensatz an ein Computersystem zu übermitteln.

### Detaillierte Beschreibung der Erfindung

Die Erfindung wird nachstehend näher erläutert, ohne zwischen den Erfindungsgegenständen (Verfahren, Vorrichtung) zu unterscheiden. Die nachfolgenden Erläuterungen sollen vielmehr für alle Erfindungsgegenstände in analoger Weise gelten, unabhängig davon, in welchem Kontext (Verfahren, Vorrichtung) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung stellt Mittel zur gezielten Behandlung eines Zielobjekts mit einem Pflanzenschutzmittel bereit.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler). Beispiele für Pflanzenschutzmittel sind Herbizide, Fungizide und Insektizide. Die beispielhaft genannten Pflanzenschutzmittel werden auch als Pestizide bezeichnet.

Bei einem Pflanzenschutzmittel im Sinne der vorliegenden Erfindung handelt es sich vorzugsweise um ein Pflanzenschutzmittel, das in eine flüssige Form gebracht werden kann. Vorzugsweise liegt es in einem Temperaturbereich von 4°C bis 35°C unter einem Druck von 1.013 mbar (Luftdruck auf Meereshöhe) flüssig vor. Es ist aber auch denkbar, dass es in einem anderen Aggregatzustand vorliegt und erst vor der Applikation (z.B. durch Erhitzen im Falle eines festen Pflanzenschutzmittels oder durch Kondensieren eines gasförmigen Pflanzenschutzmittels) in eine flüssige Form überführt wird.

"Flüssig" bedeutet dabei, dass das Pflanzenschutzmittel durch eine äußere Kraft in eine Tropfenform gebracht werden kann. Damit sollen auch pastöse Medien unter den Begriff Flüssigkeit fallen.

Es denkbar, dass mehrere (verschiedene) Pflanzenschutzmittel gleichzeitig oder nacheinander appliziert werden. In der vorliegenden Beschreibung ist aus Gründen der besseren Verständlichkeit überwiegend von *einem* Pflanzenschutz die Rede. Dies ist jedoch nicht als Beschränkung auf ein einzelnes Pflanzenschutzmittel zu verstehen, sondern der Begriff ein Pflanzenschutzmittel soll auch mehrere Pflanzenschutzmittel sowie eine Kombination von Pflanzenschutzmittel mit anderen Substanzen und/oder Substanzgemischen wie beispielsweise Pflanzennährstoffen umfassen.

Bei dem Zielobjekt, das mit einem Pflanzenschutzmittel behandelt werden soll, kann es sich um einen Schadorganismus handeln.

Unter einem "Schadorganismus" wird ein Organismus verstanden, der beim Anbau von Kulturpflanzen in Erscheinung treten und die Kulturpflanzen schädigen, die Ernte der Kulturpflanze negativ beeinflussen oder mit der Kulturpflanze um natürliche Ressourcen konkurrieren kann. Beispiele für derartige Schadorganismen sind Unkräuter, Ungräser, tierische Schädlinge wie beispielsweise Käfer, Raupen und Würmer, Pilze und Krankheitserreger (z.B. Bakterien und Viren). Auch wenn Viren aus biologischer Sicht nicht zu den Organismen zählen, sollen sie dennoch vorliegend unter den Begriff Schadorganismus fallen.

In einer bevorzugten Ausführungsform handelt es sich bei dem Zielobjekt um eine Unkraut-Pflanze. Unter dem Begriff "Unkraut" werden Pflanzen der spontanen Begleitvegetation in Kulturpflanzenbeständen, Grünland oder Gartenanlagen verstanden, die dort nicht gezielt angebaut werden und z.B. aus dem Samenpotential des Bodens oder über Zuflug zur Entwicklung kommen. Der Begriff ist nicht auf Kräuter im eigentlichen Sinne beschränkt, sondern umfasst auch Gräser, Farne, Moose oder holzige Pflanzen. Im Bereich des Pflanzenschutzes wird häufig auch der Begriff "Ungras" benutzt, um eine Abgrenzung zu den krautigen Pflanzen zu verdeutlichen. Im vorliegenden Text wird der Begriff Unkraut als Oberbegriff verwendet, der den Begriff Ungras erfassen soll. Unkräuter im Sinne der vorliegenden Erfindung sind demnach Pflanzen, die beim Anbau einer gewünschten Kulturpflanze als Begleitung auftreten. Da sie mit der Kulturpflanze um Ressourcen konkurrieren, sind sie unerwünscht und sollen daher bekämpft werden.

In einer weiteren bevorzugten Ausführungsform handelt es sich bei dem Zielobjekt um einen tierischen Schadorganismus, wie beispielsweise einen Gliederfüßer. Etwa zwei Drittel der gegenwärtig bekannten Tierarten gehören zu den Gliederfüßern (Stamm Arthropoda), die zu 85% von Insekten repräsentiert werden. Ein erheblicher Anteil der Arthropoden ist phytophag: diese Tiere ernähren sich von Pflanzen und können zur Beeinträchtigung des Wachstums führen, Saug- und Fraßschäden verursachen sowie Viruskrankheiten übertragen. Auf diese Weise werden beispielsweise erhebliche Ertrags- und Qualitätsverluste beim Anbau von Kulturpflanzen verursacht. In einer bevorzugten Ausführungsform handelt es sich bei dem tierischen Schädling um ein Insekt (in den verschiedenen Stadien von Larve (Raupe, Afterraupe) bis zum Adultstadium) oder ein Spinnentier. Besonders bevorzugt handelt es sich bei dem Schädling um einen Agrarschädling wie beispielsweise Apfelwickler, Blattlaus, Fransenflügler, Fruchtschalenwickler, Kartoffelkäfer, Kirschfruchtfliege, Maikäfer, Maiszünsler, Pflaumenwickler, Rhododendron-Zikade, Saateule, Schildlaus, Schwammspinner, Spinnmilbe, Traubenwickler, Walnussfruchtfliege, Weiße Fliege, Großer Rapsstengelrüssler, Gefleckter Kohltriebrüssler, Rapsglanzkäfer, Kohlschotenrüssler, Kohlschotenmücke oder Rapserdfloh, oder um einen Forstschädling wie beispielsweise Blattlaus, Blauer Kiefernprachtkäfer, Borkenkäfer, Eichenprachtkäfer, Eichen-Prozessionsspinner, Eichenwickler, Fichtengespinstblattwespe, Gemeiner Holzwurm, Großer Brauner Rindenfresser, Kiefernbuschhornblattwespe, Kieferneule, Kiefernspanner, Kleine Fichtenblattwespe, Nonne, Rosskastanienminiermotte, Schwammspinner oder Splintholzkäfer.

In einer weiteren bevorzugten Ausführungsform handelt es sich bei dem Zielobjekt um eine Kulturpflanze, die von einem Pilz, einem Bakterium oder einem Virus befallen ist. Unter dem Begriff "Kulturpflanze" wird eine Pflanze verstanden, die durch das Eingreifen der Menschen zielgerichtet als Nutz- oder Zierpflanze angebaut wird.

Die erfindungsgemäße Behandlung eines Zielobjekt kann in vier Schritten erfolgen:
1. Identifizieren des Zielobjekts und Bestimmung der Dosierung
2. Ermitteln einer Zielregion
3. Applizieren eines Pflanzenschutzmittels auf die Zielregion
4. Dokumentieren der Applikation

Diese Schritte erfolgen automatisch/automatisiert, d.h. ohne Zutun eines Menschen.

Diese Schritte, die ihrerseits mehrere Unterschritte umfassen können, werden nachfolgend näher beschrieben.

### Identifizieren des Zielobjekts

Bevor ein Zielobjekt mit einem Pflanzenschutzmittel behandelt werden kann, muss das Zielobjekt zunächst erkannt (identifiziert) werden.

Erfindungsgemäß erfolgt die Identifizierung des Zielobjekts auf Basis einer Bildaufnahme, die das Zielobjekt zeigt. Es ist denkbar, dass die Identifizierung auf Basis von mehreren (z.B. in zeitlichen Abständen aufgenommenen und/oder aus verschiedenen Richtungen (Blickwinkeln)) aufgenommen Bildaufnahmen erfolgt. Die eine Bildaufnahme oder die mehreren Bildaufnahmen, die zur Identifikation des Zielobjekts verwendet werden, werden in dieser Beschreibung auch als die erste Bildaufnahme / die ersten Bildaufnahmen bezeichnet.

Unter dem Begriff "Bildaufnahme" wird vorzugsweise eine zweidimensionale Abbildung eines Objekts oder eines Teils davon verstanden. Üblicherweise handelt es sich bei der Bildaufnahme um eine digitale Bildaufnahme. Der Begriff "digital" bedeutet, dass die Bildaufnahme von einer Maschine, in der Regel einem Computersystem, verarbeitet werden kann. Unter "Verarbeitung" werden die bekannten Verfahren zur elektronischen Datenverarbeitung (EDV) verstanden. Digitale Bildaufnahmen können mit Computersystemen und Software verarbeitet, bearbeitet und reproduziert sowie in standardisierte Datenformate konvertiert werden, wie zum Beispiel JPEG (Grafikformat der *Joint Photographic Experts Group*)*,* PNG (*Portable Network Graphics*) oder SVG (*Scalable Vector Graphics*)*.* Digitale Bildaufnahmen können mit geeigneten Anzeigegeräten visualisiert werden, wie zum Beispiel mit Computermonitoren, Projektoren und/oder Druckern.

Eine oder mehrere erste Bildaufnahmen des Zielobjekts können mit einer oder mehreren Bildaufnahmeeinheiten erzeugt werden. Bei einer solchen Bildaufnahmeeinheit kann es sich beispielsweise um eine Kamera handeln.

Eine Kamera umfasst üblicherweise einen Bildsensor und optische Elemente. Der Bildsensor ist eine Vorrichtung zur Aufnahme von zweidimensionalen Abbildern aus Licht auf elektrischem Weg. Üblicherweise handelt es sich um einen halbleiterbasierten Bildsensor wie beispielsweise ein CCD- (CCD = *charge-coupled device*) oder CMOS-Sensor (CMOS = *complementary metal-oxide-semiconductor*). Die optischen Elemente (Linsen, Blenden und dergleichen) dienen einer möglichst scharfen Abbildung des Gegenstands (Objekts), von dem eine digitale Bildaufnahme erzeugt werden soll, auf dem Bildsensor.

Auch andere Vorrichtungen und Systeme, die eine Abbildung eines Objekts erzeugen können, wie beispielsweise eine Anordnung von Hyperspektralsensoren, eine Wärmebildkamera (Infrarotkamera), ein Laserscanner, ein LIDAR-System (LIDAR = *light detection and ranging* oder *light imaging, detection and ranging*)*,* eine Ultraschallquelle in Kombination mit einem Ultraschallsensor und/oder Kombinationen aus mehreren Einheiten, sollen unter den Begriff "Bildaufnahmeeinheit" fallen.

Basiert die Erzeugung einer Bildaufnahme auf der Erfassung der räumlichen Verteilung von elektromagnetischen Strahlen, können die elektromagnetischen Strahlen Teil des Sonnenlichts sein und/oder von einer oder mehreren künstlichen Quellen für elektromagnetische Strahlung erzeugt werden, wie beispielsweise LED- (LED = *light-emitting diode*) und/oder Halogenstrahler.

Zur Identifikation eines Zielobjekts auf Basis einer oder mehrerer erster Bildaufnahmen, die zumindest einen Teil des Zielobjekt zeigen, wird vorzugsweise ein trainiertes Modell des maschinellen Lernens verwendet.

Ein "Modell des maschinellen Lernens" kann als eine computerimplementierte Datenverarbeitungsarchitektur verstanden werden. Das Modell kann Eingangsdaten empfangen und Ausgangsdaten auf der Grundlage dieser Eingangsdaten und Modell-Parametern liefern. Das Modell kann durch Training eine Beziehung zwischen den Eingabedaten und den Ausgabedaten erlernen. Beim Training können die Modell-Parameter angepasst werden, um eine gewünschte Ausgabe für eine bestimmte Eingabe zu liefern.

Beim Trainieren eines solchen Modells werden dem Modell Trainingsdaten präsentiert, aus denen es lernen kann. Das trainierte Modell des maschinellen Lernens ist das Ergebnis des Trainingsprozesses. Die Trainingsdaten umfassen neben Eingabedaten die korrekten Ausgabedaten (Zieldaten), die das Modell auf Basis der Eingabedaten erzeugen soll. Beim Trainieren werden Muster erkannt, die die Eingabedaten auf die Zieldaten abbilden.

Im Trainingsprozess werden die Eingabedaten der Trainingsdaten in das Modell eingegeben, und das Modell erzeugt Ausgabedaten. Die Ausgabedaten werden mit den Zieldaten verglichen. Modell-Parameter werden so verändert, dass die Abweichungen zwischen den Ausgabedaten und den Zieldaten auf ein (definiertes) Minimum reduziert werden.

Im Training kann eine Fehlerfunktion (engl.: *loss function*) verwendet werden, um die Vorhersagequalität des Modells zu bewerten. Die Fehlerfunktion kann so gewählt werden, dass sie eine erwünschte Beziehung zwischen Ausgabedaten und Zieldaten belohnt und/oder eine unerwünschte Beziehung zwischen Ausgabedaten und Zieldaten bestraft. Eine solche Beziehung kann z.B. eine Ähnlichkeit, eine Unähnlichkeit oder eine andere Beziehung sein.

Eine Fehlerfunktion kann verwendet werden, um einen Fehlerwert (engl.: *loss value*) für ein gegebenes Paar aus Ausgabedaten und Zieldaten zu berechnen. Das Ziel des Trainingsprozesses kann darin bestehen, die Parameter des maschinellen Lernmodells so zu verändern (anzupassen), dass der Fehlerwert für alle Paare des Trainingsdatensatzes auf ein (definiertes) Minimum reduziert wird.

Eine Fehlerfunktion kann z.B. die Abweichung zwischen den Ausgabedaten des Modells für bestimmte Eingabedaten und den Zieldaten quantifizieren. Handelt es sich bei den Ausgabedaten und den Zieldaten beispielsweise um Zahlen, kann die Fehlerfunktion die absolute Differenz zwischen diesen Zahlen sein. In diesem Fall kann ein hoher absoluter Wert der Fehlerfunktion bedeuten, dass ein oder mehrere Modell-Parameter in hohem Maße geändert werden müssen.

Bei Ausgabedaten in Form von Vektoren können beispielsweise Differenzmetriken zwischen Vektoren wie der mittlere quadratische Fehler, ein Kosinusabstand, eine Norm des Differenzvektors wie ein euklidischer Abstand, ein Tschebyscheff-Abstand, eine Lp-Norm eines Differenzvektors, eine gewichtete Norm oder jede andere Art von Differenzmetrik zweier Vektoren als Fehlerfunktion gewählt werden.

Bei höherdimensionalen Ausgaben, wie z.B. zweidimensionalen, dreidimensionalen oder höherdimensionalen Ausgaben, kann z. B. eine elementweise Differenzmetrik verwendet werden. Alternativ oder zusätzlich können die Ausgabedaten vor der Berechnung eines Verlustwertes transformiert werden, z.B. in einen eindimensionalen Vektor.

Im vorliegenden Fall kann das Modell des maschinellen Lernens trainiert werden, auf Basis einer oder mehrerer erster Bildaufnahmen, die zumindest anteilig ein Zielobjekt zeigen, eine Information auszugeben, wobei die Information angibt, um welches Zielobjekt es sich handelt. Das Modell des maschinellen Lernens kann als Klassifikationsmodell konfiguriert sein, das einer oder mehreren ersten Bildaufnahmen als Eingabedaten eine von mehreren Klassen zuordnet, wobei jede Klasse ein definiertes Zielobjekt repräsentiert.

Das Modell des maschinellen Lernens kann beispielsweise trainiert werden, Unkräuter von Kulturpflanzen zu unterscheiden. In einem solchen Fall kann das Klassifikationsmodell konfiguriert sein, eine oder mehrere erste Bildaufnahmen einer von zwei Klassen zuzuordnen, wobei eine erste Klasse Unkräuter repräsentiert und die andere Klasse Pflanzen (oder andere Gegenstände) repräsentiert, die keine Unkräuter sind (z.B. Kulturpflanzen).

Das Modell des maschinellen Lernens kann beispielsweise trainiert werden, spezifische Unkräuter und/oder spezifische Kulturpflanzen zu erkennen. Jede spezifische Pflanze kann durch eine Klasse repräsentiert werden.

Ebenso kann das Modell des maschinellen Lernens trainiert werden, (spezifische oder unspezische) Schadorganismen zu erkennen, wie beispielsweise (spezifische oder unspezische) Insekten und/oder Spinnentiere. Der Begriff "spezifisch" bedeutet, dass ein definierter Stamm, eine definierte Klasse, eine definierte Ordnung, eine definierte Familie, eine definierte Gattung und/oder eine definierte Art eines Schadorganismus betrachtet wird. Der Begriff "unspezifisch" bedeutet, dass lediglich zwischen Schadorganismus und Nicht-Schadorganismus, Unkraut und Nicht-Unkraut, tierischer Schädling und tierischer Nicht-Schädling oder dergleichen unterschieden wird.

Ebenso kann das Modell des maschinellen Lernens trainiert werden, tierische Schadorganismen von tierischen Nützlingen zu unterscheiden. Unter einem Nützling wird ein Organismus verstanden, dem ein Schadorganismus Nahrungsquelle oder Wirt dient oder der aus anderen Gründen für eine erfolgreiche Ernte von Bedeutung ist (z.B. als Bestäuber).

Ebenso kann das Modell des maschinellen Lernens trainiert werden, eine von einem Krankheitserreger (z.B. Bakterium, Virus) und/oder einem Pilz befallen Kulturpflanze von einer gesunden, nicht-befallenen Kulturpflanze zu unterscheiden. Das Modell des maschinellen Lernens kann auch trainiert werden, spezifische Krankheitserreger und/oder Pilze zu erkennen.

Es ist auch denkbar, dass das Modell des maschinellen Lernens trainiert wird, zwei Objekte (ein erstes und ein zweites Objekt) gleichzeitig oder nacheinander zu erkennen oder, es liegen mehrere Modelle des maschinellen Lernens vor, von denen ein erstes Modell trainiert wird, ein erstes Objekt zu erkennen, und ein zweites Modell trainiert wird, ein zweites Objekt zu erkennen. Bei dem ersten Objekt kann es sich beispielsweise eine (spezifische) Kulturpflanze handeln und bei dem zweiten Objekt kann es sich beispielsweise um einen (spezifischen) Schadorganismus für die (spezifische) Kulturpflanze handeln.

Das Trainieren eines Modells des maschinellen Lernens kann auf Basis von Trainingsdaten erfolgen. Die Trainingsdaten können eine Vielzahl von Referenz-Bildaufnahmen von Zielobjekten und einer Information, um welches Zielobjekt es sich jeweils handelt, umfassen. Der Begriff "Vielzahl" bedeutet vorzugsweise mehr als 100. Der Begriff "Referenz-Bildaufnahme" dient lediglich der Unterscheidung von Bildaufnahmen, die zum Trainieren eines Modells des maschinellen Lernens verwendet werden, von Bildaufnahmen, die bei der Verwendung des trainierten Modells des maschinellen Lernens verwendet werden, um ein Zielobjekt in einer Bildaufnahme zu erkennen. Bei der Information, um welches Zielobjekt es sich in einer Bildaufnahme jeweils handelt, kann es sich beispielsweise um eine Kennnummer handeln, die dem Zielobjekt zugeordnet worden ist (Zielwert).

Die Referenz-Bildaufnahmen können dem Modell des maschinellen Lernens zugeführt werden und das Modell des maschinellen Lernens kann konfiguriert sein, eine Ausgabe zu erzeugen, die das Zielobjekt kennzeichnen soll, wie beispielsweise eine Kennnummer. Die Ausgabe kann mit dem Zielwert verglichen werden. Mittels einer Fehlerfunktion kann die Abweichung zwischen der Ausgabe und dem Zielwert quantifiziert werden. Parameter des Modells des maschinellen Lernens können verändert werden, um die Abweichung auf ein (definiertes) Minimum zu reduzieren. Dies kann beispielsweise mittels eines Backpropagation-Verfahrens erfolgen.

Ist die Abweichung zwischen der Ausgabe und dem Zielwert für eine Vielzahl an Referenz-Bildaufnahmen auf ein (definiertes) Minimum reduziert, kann das so trainierte Modell des maschinellen Lernens verwendet werden, um Zielobjekte in unbekannten Bildaufnahmen zu erkennen. Dabei bedeutet der Begriff "unbekannt", dass eine entsprechende Bildaufnahme nicht beim Trainieren des Modells verwendet worden ist.

Vorzugsweise handelt es sich bei dem Modell des maschinellen Lernens um ein künstliches neuronales Netzwerk oder das Modell umfasst ein solches.

Ein künstliches neuronales Netzwerk umfasst mindestens drei Schichten von Verarbeitungselementen: eine erste Schicht mit Eingangsneuronen (Knoten), eine N-te Schicht mit mindestens einem Ausgangsneuron (Knoten) und N-2 innere Schichten, wobei N eine natürliche Zahl und größer als 2 ist.

Die Eingangsneuronen dienen zum Empfangen einer oder mehrerer Bildaufnahmen. Die Ausgangsneuronen dienen dazu, Ausgabedaten auszugeben, die ein in einer Bildaufnahme gezeigtes Zielobjekt kennzeichnen.

Die Verarbeitungselemente der Schichten zwischen den Eingangsneuronen und den Ausgangsneuronen sind in einem vorbestimmten Muster mit vorbestimmten Verbindungsgewichten miteinander verbunden.

Das Trainieren des neuronalen Netzes kann beispielsweise mittels eines Backpropagation-Verfahrens durchgeführt werden. Dabei wird für das Netz eine möglichst zuverlässige Abbildung von gegebenen Eingabedaten auf gegebene Ausgabedaten angestrebt. Die Qualität der Abbildung wird durch eine Fehlerfunktion beschrieben. Das Ziel ist die Minimierung der Fehlerfunktion. Das Einlernen eines künstlichen neuronalen Netzes erfolgt bei dem Backpropagation-Verfahren durch die Änderung der Verbindungsgewichte.

Im trainierten Zustand enthalten die Verbindungsgewichte zwischen den Verarbeitungselementen Informationen bezüglich der Beziehung zwischen Bildaufnahmen und transformierten Bildaufnahmen.

Eine Kreuzvalidierungsmethode kann verwendet werden, um die Daten in Trainings- und Validierungsdatensätze aufzuteilen. Der Trainingsdatensatz wird beim Backpropagation-Training der Netzwerkgewichte verwendet. Der Validierungsdatensatz wird verwendet, um zu überprüfen, mit welcher Vorhersagegenauigkeit sich das trainierte Netzwerk auf unbekannte Daten anwenden lässt.

Modelle des maschinellen Lernens zur Erkennung von Schadorganismen sind im Stand der Technik beschrieben (siehe z.B.: WO2021090294A1, DE102018222428A1, US20200045953A1, WO2019/046203A1, EP3804488A1, US20210383535, US10599959).

### Ermitteln einer Zielregion

Ist ein Zielobjekt identifiziert, wird in einem weiteren Schritt eine Zielregion ermittelt, auf die ein oder mehrere Pflanzenschutzmittel appliziert werden sollen. Die Zielregion kann das Zielobjekt oder ein Teil davon sein. Im Falle eines tierischen Schadorganismus ist die Zielregion vorzugsweise das Zielobjekt selbst / als Ganzes oder ein Körperteil wie beispielsweise der Kopf. Bei einer Zielregion kann es sich auch um Zielobjekte handeln, die bestimmte reproduktiven Stadien eines tierischen Schaden Organismus darstellen, wie z.B. Larven oder Eier. Im Falle von phytopathogenen Pilzen ist die Zielregion der Bereich der Nutzpflanze, die von dem Pilz befallen ist.

Im Falle einer Unkraut-Pflanze ist die Zielregion vorzugsweise ein Teil des Zielobjekts, die gegenüber Pflanzenschutzmittel eine besonders hohe Empfindlichkeit haben und für das Wachstum oder Vermehrung des Zielobjekts eine hohe Bedeutung haben. Beispiele sind Sprossachsen, Wurzeln, Blattachsen, Triebachsen, Triebwurzeln, Blattwurzeln, Kotelydonen, Knospen, Blüten oder Teile von Blüten.

Ist das Zielobjekt ein Schadorganismus, wird vorzugsweise diejenige Region als Zielregion gewählt, bei der ein Pflanzenschutzmittel eine Wirkung (vorzugsweise eine optimale Wirkung) entfacht. Ist das Zielobjekt beispielsweise eine Unkrautpflanze und wird das zu applizierende Pflanzenschutzmittel (z.B. ein Herbizid) von der Unkrautpflanze über die Blätter aufgenommen und führt dann zu einer Schädigung der Unkrautpflanze, wird als Zielregion ein Blatt gewählt. Als Zielregion kann ferner eine Seite eines Blattes gewählt werden, beispielsweise eine Blattoberseite (die der Sonne zugewandte Seite eines Blattes) und/oder eine Blattunterseite (die der Sonne abgewandte Seite eines Blattes).

Es ist auch denkbar, dass mehrere Zielregionen gewählt werden, z.B. bei einer Unkrautpflanze mehrere Blätter und/oder mehrere Bereiche auf einem Blatt / auf mehreren Blättern.

Mit der in dieser Beschreibung beschriebenen Applikationstechnik können Tropfen eines flüssigen Pflanzenschutzmittels mit einem Volumen von weniger als 15 nL erzeugt werden. Ein kugelförmiger Tropfen mit einer solchen Größe hat einen Durchmesser von etwa 0,3 mm. Wird ein solcher Tropfen auf ein Zielobjekt appliziert, benetzt er auf dem Zielobjekt eine Fläche in der Größe von etwa 0,07 mm².

Es ist also denkbar, dass eine Zielregion gewählt wird, die deutlich kleiner als 1 mm² sein kann. Ferner ist es denkbar, eine größere Fläche als die Benetzungsfläche eines Einzeltropfens zu benetzen, indem eine Vielzahl an Einzeltropfen in der Zielregion rasterförmig nebeneinander (z.B. in Form eines quadratischen oder hexagonalen Punktrasters) platziert werden.

Der Schritt "Ermitteln einer Zielregion" kann je nach Ausführungsform mehrere Bedeutungen haben und/oder mehrere Unterschritte umfassen. Ist die Zielregion mit dem Zielobjekt identisch, so kann als Zielregion das Zielobjekt gewählt werden.

Ist die Zielregion ein Teil des Zielobjekts, so kann der Schritt "Ermitteln einer Zielregion" den Unterschritt "Identifizieren einer Zielregion" umfassen. Das Identifizieren der Zielregion erfolgt vorzugsweise auf Basis einer oder mehrerer Bildaufnahmen des Zielobjekts.

Eine oder mehrere Bildaufnahmen, die zum Identifizieren einer Zielregion verwendet werden, werden in dieser Beschreibung als zweite Bildaufnahme / zweiten Bildaufnahmen bezeichnet. Es ist denkbar, dass eine oder mehrere zweite Bildaufnahmen mit einer oder mehreren ersten Bildaufnahmen identisch ist/sind. Mit anderen Worten: es ist denkbar, dass diejenige(n) Bildaufnahme(n), die zum Identifizieren des Zielobjekts verwendet wurde, auch zum Identifizieren der Zielregion verwendet wird/werden; es ist aber auch denkbar, dass andere und/oder weitere Bildaufnahmen erzeugt werden, auf deren Basis eine oder mehrere Zielregionen identifiziert werden.

So kann in einem ersten Schritt eine Unkrautpflanze auf Basis einer ersten Bildaufnahme oder mehrerer erster Bildaufnahmen identifiziert werden (das Zielobjekt), und in einem zweiten Schritt auf Basis einer zweiten Bildaufnahme oder mehrerer zweiter Bildaufnahmen ein Blatt oder ein Bereich eines Blattes der Unkrautpflanze identifiziert werden (die Zielregion). Die zweite(n) Bildaufnahme(n) kann/können ganz oder teilweise identisch zu der/den ersten Bildaufnahme(n) sein, oder davon verschieden sein.

Eine oder mehrere zweite Bildaufnahmen können (wie die erste(n) Bildaufnahme(n)) von mindestens einer Bildaufnahmeeinheit, z.B. einer Kamera, erzeugt werden. Vorzugsweise werden optische Elemente (z.B. ein Kamera-Objektiv) eingesetzt, die zu einer vergrößerten Abbildung (vergrößert im Vergleich zum Original) der Zielregion auf der Abbildung führen. Vorzugsweise wird ein Zoom-Objektiv eingesetzt.

In einer bevorzugten Ausführungsform werden mehrere Bildaufnahmeeinheiten verwendet, die zweite Bildaufnahmen der Zielregion aus unterschiedlichen Richtungen erzeugen. Auf diese Weise ist es möglich, eine Tiefeninformation zu gewinnen, die Auskunft über Abstände liefert. Eine solche Tiefeninformation kann beispielsweise verwendet werden, um einen Abstand einer Düse der Dosiereinheit von der Zielregion zu bestimmen und/oder eine Positionierung der Düse der Dosiereinheit gegenüber der Zielregion vorzunehmen. Es kann beispielsweise eine Stereokamera verwendet werden.

### Applizieren eines Pflanzenschutzmittels auf die Zielregion

Ist eine Zielregion ermittelt, so erfolgt eine Applikation von Pflanzenschutzmittel auf die Zielregion.

Die Applikation erfolgt mit einer Dosiereinheit. Es ist denkbar, dass mehrere Dosiereinheiten verwendet werden. Eine solche Dosiereinheit umfasst mindestens eine Düse. Aus der Düse wird Pflanzenschutzmittel auf die Zielregion appliziert.

Die Dosiereinheit umfasst weiterhin mindestens einen Dispenser zur exakten Dosierung von Flüssigkeiten.

Die Dosiereinheit umfasst weiterhin mindestens einem Präzisionsventil, das die Ausgabe der Einzeltropfen durch die Düse dosiert. Vorzugsweise wird für die Dosierung ein Piezo-Aktuator verwendet.

Die Dosiereinheit umfasst weiterhin einen Orientierungseinheit, zum Beispiel eine XYZ-Traverse, die die Dosiereinheit entlang drei oder mehr Achsen bewegen kann. Die Orientierungseinheit kann die Dosiereinheit auch in eine bestimmte Raumrichtung drehen, um die Flugbahn zu ändern. Vorzugsweise verläuft die Flugbahn nicht vertikal.

Die Dosiereinheit umfasst ferner einen Vorratsbehälter zur Aufnahme des Pflanzenschutzmittels und ein Mikroreservoir, in das eine definierte Menge an Pflanzenschutzmittel aus dem Vorratsbehälter gelangt, bevor diese definierte Menge, über die mindestens eine Düse appliziert wird. Pflanzenschutzmittel kann aus dem Vorratsbehälter über eine Verbindung in das Mikroreservoir gelangen. Diese Verbindung ist vorzugsweise ein Rohr oder Schlauch.

Der Schritt "Applizieren eines Pflanzenschutzmittels auf die Zielregion" kann den Schritt "Positionieren der Dosiereinheit gegenüber der Zielregion" umfassen. Die Applikation eines Pflanzenschutzmittels kann senkrecht (in Bezug auf eine Oberfläche der Zielregion) von oben und/oder von unten und/oder unter einem anderen Winkel als 90° erfolgen.

Vorzugsweise erfolgt die Applikation unter einem Winkel von 45° bis 90° in Bezug auf eine Oberfläche der Zielregion.

Vorzugsweise wird die Dosiereinheit in einem definierten Abstand von der Zielregion mit Hilfe der Orientierungseinheit positioniert. Vorzugsweise wird der Abstand innerhalb definierter Grenzen konstant gehalten: wird eine neue Zielregion ausgewählt/ermittelt, wird ein definierter Abstand innerhalb der definierten Grenzen zwischen der Dosiereinheit bzw. mindestens einer Düse der Dosiereinheit und der Zielregion eingestellt. Vorzugsweise beträgt der Abstand zwischen mindestens einer Düse und der Zielregion mindestens 10 cm, vorzugsweise mindestens 20 cm. Vorzugsweise können dadurch Zielpunkte auf der Zielregion in einem konischen Bereich unterhalb der Dosiereinheit getroffen werden.

Die Applikation des Pflanzenschutzmittels erfolgt vorzugsweise in Form eines oder mehrerer Einzeltropfen, deren Volumen im Bereich von 1 nL bis 100 nL, noch mehr bevorzugt im Bereich von 1 nL bis 50 nL, noch mehr bevorzugt im Bereich von 1 bis 30 nL liegt.

Es konnte gezeigt werden, dass sich Tropfen in der genannten Größe aus einer Entfernung von 10 cm und mehr auf die Zielregion (z.B. eine Blattoberseite oder eine Blattunterseite) eines Zielobjekts (z.B. einer mit einem Pilz oder einem Krankheitserreger befallenen Kulturpflanze oder einer Unkrautpflanze) applizieren lassen, ohne dass die Tropfen dabei von der Oberfläche der Zielregion abprallen und/oder in kleinere Tröpfchen zerfallen. Die applizierten Tropfen der genannten Größe gelangen auf die Oberfläche und bleiben dort haften.

Die Applikation des Pflanzenschutzmittels in Form von Einzeltropfen erfolgt vorzugsweise mit Hilfe einer Dosiereinheit für eine berührungslose Dosierung. Die berührungslose Dosierung - auch als Jetten, Jet-Verfahren und kontaktlose Dosierung bezeichnet - ist eine Dosierung, bei der eine abdosierte, zusammenhängende Flüssigkeitsmenge frei - also vollständig von der Dosieröffnung losgelöst - auf die Zielregion zufliegt. Die berührungslose Dosierung erlaubt ein hochpräzises Portionieren von flüssigen und pastösen Medien sowie eine zielgenaue Applikation.

Eine Dosiereinheit für eine berührungslose Dosierung kann eine Düse aufweisen, in der ein bewegliches Ausstoßelement, z.B. ein Stößel, angeordnet sein kann. Zum Ausstoßen von Pflanzenschutzmittel kann das Ausstoßelement im Inneren der Düse in einer Ausstoßrichtung mit hoher Geschwindigkeit in Richtung einer Düsenöffnung nach vorne gestoßen werden, wodurch ein einzelner Tropfen des Pflanzenschutzmittels aus der Düse ausgestoßen wird. Dieser Vorgang wird allgemein und im Folgenden als Ausstoßvorgang bezeichnet. Anschließend kann das Ausstoßelement in einer entgegengesetzten Rückzugsrichtung wieder zurückgezogen werden. Die Größe der Tröpfchen bzw. die Menge des Pflanzenschutzmittels pro Tröpfchen sind durch den Aufbau und die Ansteuerung sowie durch die dadurch erzielte Wirkung der Düse vorherbestimmbar.

Vorzugsweise wird das Pflanzenschutzmittel durch eine (Ausstoß-)Bewegung des Ausstoßelements relativ zur Düse "aktiv" aus der Düse ausgestoßen. Während des Ausstoßvorgangs kommt vorzugsweise eine Ausstoßspitze des Ausstoßelements in Kontakt mit dem abzugebenden Pflanzenschutzmittel und "drückt" bzw. "schiebt" das Pflanzenschutzmittel aufgrund der (Ausstoß-)Bewegung des Ausstoßelements und/oder der Düse aus der Düse der Dosiereinheit hinaus. Damit unterscheidet sich die Dosiereinheit gemäß der vorliegenden Erfindung von anderen Dosiersystemen, bei denen eine Bewegung eines Verschlusselements lediglich zu einer Öffnung der Düse führt, wobei ein unter Druck stehender Dosierstoff dann von selbst aus der Düse austritt. Dies ist z. B. bei Einspritzventilen von Verbrennungsmotoren der Fall.

Vorzugsweise kann das Ausstoßelement zudem in eine Verschlussstellung gebracht werden, indem es in der Düse an einem Dichtsitz der Düsenöffnung fest anschließt und dort vorübergehend verbleibt. Bei zähflüssigerem Pflanzenschutzmittel kann es auch ausreichen, dass das Ausstoßelement einfach in der Rückzugsstellung, d.h. vom Dichtsitz entfernt verbleibt, ohne dass ein Tropfen des Pflanzenschutzmittels austritt.

Die zum Ausstoßen des Pflanzenschutzmittels nötige Bewegung des Ausstoßelements kann mit Hilfe einer Aktoreinheit des Dosiersystems erfolgen. Eine solche Aktoreinheit kann prinzipiell auf verschiedene Arten realisiert sein, z.B. mittels eines pneumatisch oder hydraulisch betriebenen Aktors. Vorzugsweise kommen piezoelektrische und/oder elektromagnetisch betriebene Aktoren zum Einsatz.

Alternativ oder zusätzlich zu dem bewegbaren Ausstoßelement kann zur Abgabe von Pflanzenschutzmittel die Düse des Dosiersystems selbst in einer Ausstoß- bzw. Rückzugsrichtung bewegt werden. Zur Abgabe des Pflanzenschutzmittels können die Düse und ein im Inneren der Düse angeordnetes Ausstoßelement in einer Relativbewegung aufeinander zu bzw. voneinander wegbewegt werden, wobei die Relativbewegung entweder alleinig durch eine Bewegung der Düse oder zumindest teilweise auch durch eine entsprechende Bewegung des Ausstoßelements erfolgen kann.

Nach Ende der Ausstoßbewegung kann das Mikroreservoir automatisch aus dem Vorratsbehälter wieder befüllt werden.

Vorzugsweise erreichen die Einzeltropfen beim Dosieren eine Geschwindigkeit von [...] bis [...].

Dosiersysteme zum berührungslosen Dosieren eines Dosierstoffs sind im Stand der Technik beschrieben (siehe z.B. WO2021/028197A1, WO2020/120176A2, WO2019/197181A1, WO2015/192896A1, WO2014/140195A1); sie werden üblicherweise zur Applikation von Lötmitteln oder Klebstoffen eingesetzt.

Wie bereits beschrieben, kann ein einzelner Tropfen eines Pflanzenschutzmittels appliziert werden, oder es können mehrere Tropfen appliziert werden. Bei einem tierischen Schadorganismus kann ein einzelner Tropfen ausreichend sein, den Schadorganismus unschädlich zu machen. Im Falle eines Unkrauts und/oder einer mit einem Krankheitserreger und/oder Pilz befallenen Kulturpflanze kann es erforderlich sein, mehrere Tropfen zu applizieren, um das Unkraut und/oder den Krankheitserreger und/oder den Pilz zu bekämpfen. Es können mehrere Tropfen in Form eines definierten Musters auf die Zielregion appliziert werden, z.B. in Form eines quadratischen oder hexagonalen Punktrasters. Auch eine Verteilung von Tropfen entlang definierter Merkmale der Zielregion ist denkbar. So können beispielsweise mehrere Tropfen entlang der Mittelader eines Blattes und/oder entlang von Seitenadern eines Blattes appliziert werden.

In einer bevorzugten Ausführungsform wird die Menge des zu applizierenden Pflanzenschutzmittels automatisch auf Basis der einen oder der mehreren zweiten Bildaufnahme ermittelt, die die Zielregion zeigt/zeigen. Dabei kann Menge das Tropfenvolumen eines Einzeltropfens und/oder die Zahl an zu applizierenden Einzeltropfen bedeuten. Auch der Abstand der applizierten Einzeltropfen in der Zielregion voneinander und/oder die Verteilung der Einzeltropfen in der Zielregion können auf Basis der einen oder der mehreren zweiten Bildaufnahmen automatisiert ermittelt/festgelegt werden.

Die hohe Präzision und geringe Menge der aufgebrachten Tropfen hat den Vorteil, dass kein Pflanzenschutzmittel von der Zielregion auf anderen Regionen, insbesondere den Boden gelangt und somit nur eine minimale Oberfläche mit dem Pflanzenschutzmittel in Kontakt kommt.

In einer bevorzugten Form kann die Dosiereinheit an einer autonomen, mobilen Roboterplattform, vorzugsweise wetterunabhängig, gekoppelt werden. Somit wird die Dosiereinheit zusätzlich zur Orientierung durch die Orientierungseinheit in Fahrrichtung bewegt. Andere Formen sind jedoch auch möglich, z.B. Anbaugerät, UAV, oder Handgerät.

Die Dosiereinheit kann zusätzlich an einen passiven oder aktiven Windschutz installiert werden, um eine Drift der Tropfen zu verhindern. Der aktive Windschutz beeinflusst die Luftströmung im Bereich des Dispensers mit einem pneumatischen Gegendruck. Dazu wird die lokale Windgeschwindigkeit und der Böen-Faktor gemessen. Ein Modellbasierter Vorhersage Algorithmus regelt die das pneumatische System.

### Dokumentieren der Applikation

Der Schritt "Dokumentieren der Applikation" dient dem Nachweis, dass die Applikation auf die Zielregion beschränkt ist. Mit anderen Worten: durch das Dokumentieren der Applikation wird festgehalten, dass Pflanzenschutzmittel ausschließlich auf die Zielregion appliziert worden ist, und kein Pflanzenschutzmittel in einen Bereich außerhalb der Zielregion gelangt ist.

Das Dokumentieren der Applikation erfolgt auf Basis einer dritten Bildaufnahme oder auf Basis mehrerer dritter Bildaufnahmen.

Eine solche dritte Bildaufnahme zeigt die Zielregion nach der Applikation eines oder mehrerer Einzeltropfen des Pflanzenschutzmittels. Auf einer solchen dritten Bildaufnahme ist ein Einzeltropfen oder es sind mehrerer Einzeltropen in der Zielregion gezeigt.

Vorzugsweise ist die Erzeugung einer Bildaufnahme von der Zielregion so auf die Ausstoßbewegung des Ausstoßelements abgestimmt, dass vor einer Ausstoßbewegung und eine definierte Zeitspanne nach einer Ausstoßbewegung jeweils eine Bildaufnahme von der Zielregion erzeugt wird. Die definierte Zeitspanne ist dabei vorzugsweise größer als die Zeitspanne, die ein Einzeltropfen benötigt, von der Düsenöffnung in die Zielregion zu gelangen, nachdem das Ausstoßelement den Einzeltropen ausgestoßen hat. Dadurch können eine Bildaufnahme von der Zielregion vor der Applikation eines Einzeltropfens und eine weitere Bildaufnahme von der Zielregion nach der Applikation des Einzeltropfens erzeugt werden. Durch Vergleich der beiden Bildaufnahmen (vorher/nachher) kann gezeigt werden, dass in der Bildaufnahme, die eine definierte Zeitspanne nach der Ausstoßbewegung erzeugt worden ist, im Vergleich zu der Bildaufnahme, die vor der Ausstoßbewegung erzeugt worden ist, ein Einzeltropen in der Zielregion hinzugekommen ist. Die Koppelung der Ausstoßbewegung mit der Erzeugung von Bildaufnahmen von der Zielregion erlaubt also den Nachweis, dass jeder Einzeltropfen, der ausgestoßen worden ist, auch tatsächlich in der Zielregion angekommen ist.

Die eine oder die mehreren dritten Bildaufnahmen werden mit Hilfe mindestens einer Bildaufnahmeeinheit erzeugt; vorzugsweise wird dieselbe Bildaufnahmeeinheit verwendet, die auch zum Identifizieren/Ermitteln der Zielregion verwendet wurde.

Es ist denkbar, dass auch der Ausstoßvorgang dokumentiert wird, d.h. dass durch eine oder mehrere Bildaufnahmen dokumentiert wird, dass ein Einzeltropfen die Düsenöffnung der Dosiervorrichtung verlässt. Hierfür kann eine Tropfendetektionseinheit verwendet werden, wie sie z.B. in WO2017/060336A1 beschrieben ist.

Vorzugsweise wird der Applikationsvorgang in Form eines Datensatzes festgehalten. Ein solcher Datensatz umfasst vorzugsweise eine oder mehrere erste Bildaufnahmen von dem Zielobjekt, eine Information darüber, welches Zielobjekt auf Basis der einen oder der mehreren ersten Bildaufnahmen identifiziert worden ist, und eine oder mehrere dritte Bildaufnahmen, die einen oder mehrere applizierte Einzeltropfen zeigen.

Der Datensatz kann ferner eine oder mehrere zweite Bildaufnahmen umfassen.

Die eine oder mehrere erste Bildaufnahmen zeigen das Zielobjekt, das mit Pflanzenschutzmittel behandelt wird.

Die Information darüber, welches Zielobjekt auf Basis der einen oder der mehreren ersten Bildaufnahmen identifiziert worden ist, kann verwendet werden, um Fehler bei der Identifikation zu ermitteln. Die eine oder die mehreren ersten Bildaufnahmen des Zielobjekts können von einem Menschen gesichtet werden, der geschult ist, das Zielobjekt in der einen oder den mehreren ersten Bildaufnahmen zu erkennen. Der Mensch kann dann die Information, welches Zielobjekt in der einen oder den mehreren ersten Bildaufnahmen von der erfindungsgemäßen Vorrichtung identifiziert worden ist, prüfen und feststellen, ob die Identifikation der erfindungsgemäßen Vorrichtung richtig oder falsch gewesen ist.

Die ein oder die mehreren zweiten Bildaufnahmen geben Auskunft darüber, welche Zielregion für die Applikation des Pflanzenschutzmittels ausgewählt/ermittelt worden ist.

Die eine oder die mehreren dritten Bildaufnahmen geben Auskunft darüber, ob und welche Menge an Pflanzenschutzmittel in der Zielregion angekommen ist.

Vorzugsweise umfasst der Datensatz auch Informationen zu den applizierten Mengen, d.h. den Mengen, die von der Dosiereinheit abgegeben worden sind.

Vorzugsweise umfasst der Datensatz auch Informationen zu den Zeitpunkten, an denen Tropfen von der Dosiereinheit abgegeben worden sind, und zu den Zeitpunkten, an denen Bildaufnahmen, vorzugsweise eine oder mehrere dritte Bildaufnahmen erzeugt worden sind.

Vorzugsweise umfasst der Datensatz auch Informationen zu den Geokoordinaten der erfindungsgemäßen Vorrichtung zum Zeitpunkt der Identifikation des Zielobjekts und/oder zum Zeitpunkt der Ermittlung/Identifikation der Zielregion und/oder zum Zeitpunkt der Applikation von Pflanzenschutzmittel und/oder zu einem anderen Zeitpunkt und/oder zu mehreren anderen Zeitpunkten vor, während und/oder nach der Ausführung des erfindungsgemäßen Verfahrens. Zur Ermittlung der Geokoordinaten kann die erfindungsgemäße Vorrichtung mit Mitteln zur Positionsbestimmung ausgestattet sein, wie beispielsweise mit einem GPS-Sensor (GPS: *Global Positioning System*) oder einem anderen Sensor zur Positionsbestimmung auf Basis eines Navigationssatellitensystems.

Der Datensatz kann in einem Datenspeicher gespeichert werden. Er kann einem Menschen gegenüber mit Hilfe eines Anzeigegeräts (z.B. einem Monitor oder einem Drucker) ausgegeben werden. Er kann über eine Sendeeinheit an ein (separates) Computersystem übermittelt werden. Die Übermittlung kann ganz oder teilweise kabelgebunden und/oder über Funk (z.B. über Mobilfunk) erfolgen.

Die Erfindung wird nachfolgend anhand von Zeichnungen näher erläutert, ohne die Erfindung auf die in den Zeichnungen gezeigten Merkmale und Merkmalskombinationen beschränken zu wollen.

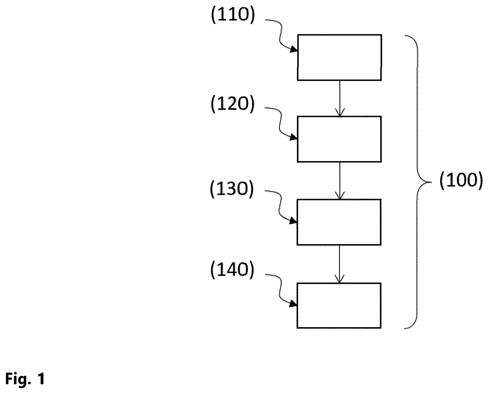

Fig. 1 zeigt beispielhaft und schematisch das erfindungsgemäße Verfahren in Form von vier Schritten in einem Ablaufschema.

Das Verfahren (100) umfasst die Schritte:
(110) Identifizieren des Zielobjekt und Bestimmung der Aufwandmenge
(120) Ermitteln einer Zielregion
(130) Applizieren eines Pflanzenschutzmittels auf die Zielregion
(140) Dokumentieren der Applikation

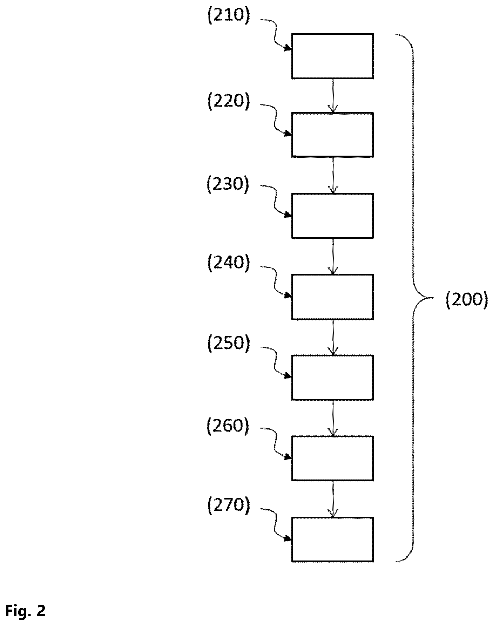

Fig. 2 zeigt beispielhaft und schematisch eine bevorzugte Ausführungsform des erfindungsgemäßen Verfahrens in Form eines Ablaufschemas.

Das Verfahren (200) umfasst die Schritte:
(210) Erzeugen einer ersten Bildaufnahme von einem Zielobjekt,
(220) Identifizieren des Zielobjekts auf Basis der ersten Bildaufnahme,
(230) Ermitteln einer Zielregion auf Basis der ersten Bildaufnahme und/oder auf Basis einer zweiten Bildaufnahme,
(240) Applizieren einer Menge eines Pflanzenschutzmittels auf die Zielregion mit Hilfe einer Dosiereinheit,
(250) Erzeugen einer dritten Bildaufnahme, wobei die dritte Bildaufnahme das auf die Zielregion applizierte Pflanzenschutzmittel zeigt,
(260) Erzeugen eines Datensatzes umfassend
   - die erste und/oder die zweite Bildaufnahme,
   - eine Information über das ermittelte Zielobjekt, und
   - die dritte Bildaufnahme,
(270) Ausgeben und/oder Speichern des Datensatzes und/oder Übermitteln des Datensatzes an ein Computersystem.

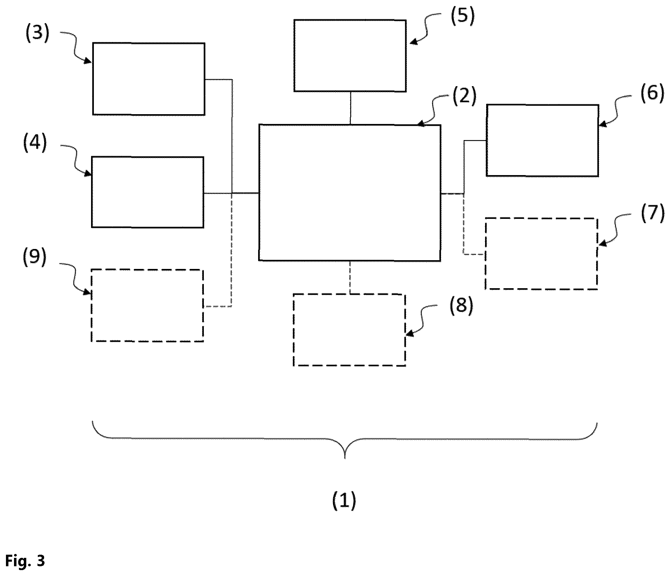

Fig. 3 zeigt beispielhaft und schematisch eine bevorzugte Ausführungsform der erfindungsgemäßen Vorrichtung.

Die Vorrichtung (1) umfasst
- eine Steuer- und Recheneinheit (2),
- mindestens eine Bildaufnahmeeinheit (3, 4),
- eine Dosiereinheit (5), und
- einen Datenspeicher (6).

Die in Fig. 3 dargestellte Vorrichtung umfasst zwei Bildaufnahmeeinheiten, eine erste Bildaufnahmeeinheit (3) und eine zweite Bildaufnahmeeinheit (4). Mit der ersten Bildaufnahmeeinheit (3) kann eine erste Bildaufnahme oder es können mehrere erste Bildaufnahmen erzeugt werden, die ein Zielobjekt zumindest anteilig zeigen, und auf deren Basis das Zielobjekt identifiziert wird. Mit der zweiten Bildaufnahmeeinheit (4) kann eine zweite und/oder dritte Bildaufnahme oder es können mehrere zweite und/oder dritte Bildaufnahmen erzeugt werden. Die eine oder die mehreren zweiten Bildaufnahmen dienen der Ermittlung/Identifikation der Zielregion; die eine oder die mehreren dritten Bildaufnahmen dienen dem Nachweis der ausschließlichen Applikation von Pflanzenschutzmittel auf die Zielregion.

Die Vorrichtung (1) kann optional eine Sendeeinheit (7) und/oder eine Positionsbestimmungseinheit (8) und/oder eine Quelle (9) für elektromagnetische Strahlung umfassen.

Die Steuer- und Recheneinheit (2) ist konfiguriert,
- von der mindestens einen ersten Bildaufnahmeeinheit (3) eine erste Bildaufnahme zu empfangen,
- ein Zielobjekt in der ersten Bildaufnahme zu identifizieren,
- optional eine zweite Bildaufnahme von der mindestens einen zweiten Bildaufnahmeeinheit (4) zu empfangen,
- eine Zielregion auf Basis der ersten und/oder zweiten Bildaufnahme zu ermitteln,
- die Dosiereinheit (5) zu veranlassen, eine Menge eines Pflanzenschutzmittels auf die Zielregion zu applizieren,
- die mindestens eine zweite Bildaufnahmeeinheit (4) zu veranlassen, eine dritte Bildaufnahme zu erzeugen, wobei die dritte Bildaufnahme das auf die Zielregion applizierte Pflanzenschutzmittel zeigt,
- einen Datensatz zu erzeugen, wobei der Datensatz
   ∘ die erste und/oder die zweite Bildaufnahme,
   ∘ eine Information über das ermittelte Zielobjekt, und
   ∘ die zweite Bildaufnahme
   umfasst, und
- den Datensatz in dem Datenspeicher (6) zu speichern und optional die Sendeeinheit (7) zu veranlassen, den Datensatz an ein Computersystem zu übermitteln.

Mit der Positionsbestimmungseinheit (8) kann die Position der erfindungsgemäßen Vorrichtung (1) ermittelt werden.

Mit der Quelle (9) für elektromagnetische Strahlung kann das Zielobjekt und/oder die Zielregion beleuchtet werden, um Bildaufnahmen unabhängig vom Umgebungslicht (z.B. Sonnenlicht) erzeugen zu können.

Die erfindungsgemäße Vorrichtung kann allgemein (d.h. nicht beschränkt auf die in Fig. 3 dargestellte Ausführungsform) über Mittel verfügen, mit der sich die Vorrichtung autonom innerhalb eines Feldes für Kulturpflanzen bewegen kann. So kann die erfindungsgemäße Vorrichtung beispielsweise als ein Roboter oder ein Fahrzeug ausgeführt sein. Entsprechende Fortbewegungsmittel sind im Stand der Technik beschrieben (siehe z.B.: WO2016/116888A1, US20030229425A1, WO2019/100118A1, WO2016/191825, US20200253127A1).

Die erfindungsgemäße Vorrichtung kann allgemein (d.h. nicht beschränkt auf die in Fig. 3 dargestellte Ausführungsform) über einen passiven und/oder aktiven Windschutz verfügen. Ein Windschutz kann sicherstellen, dass Einzeltropfen auf ihrer Flugbahn von der Dosiereinheit in Richtung der Zielregion nicht von der gewünschten Ziellaufbahn abdriften. Ein passiver Windschutz kann beispielsweise mit Schutzschilden erreichet werden. Ein aktiver Windschutz kann die Luftströmung im Bereich der Dosiereinheit z.B. mit einem pneumatischen Gegendruck beeinflussen. Dazu können die lokale Windgeschwindigkeit und der Böen-Faktor gemessen werden. Ein modellbasierter Vorhersage-Algorithmus kann das pneumatische System regeln.

Die vorliegende Erfindung vereint die zielgenaue Applikation von Pflanzenschutzmittel mit dem Nachweis, dass Pflanzenschutzmittel ausschließlich auf definierte Zielregionen appliziert worden ist.

Mittels der vorliegenden Erfindung können Pflanzenschutzmittel in Kleinstmengen so dosiert werden, dass eine Kontamination von Grundwasser, Böden und/oder Nutzpflanzen vermieden wird.

Durch die vorliegende Erfindung können Beikräuter selektiv am Wachstum gehindert, oder basierend auf Synergieeffekten im Wachstum gefördert werden. Damit ist es möglich, die Biodiversität unter Berücksichtigung der Gesamtwirtschaftlichkeit im Pflanzenbau zu maximieren.

Schädlingspopulationen müssen nicht komplett entfernt werden, sondern können auf eine ökologische sinnvolle Populationsgröße reduziert werden.

Zur Qualitätssteigerung des Ernteguts und/oder der Biodiversität kann das erfindungsgemäße Verfahren in regelmäßigen Abständen, vorzugsweise täglich mit vorzugsweise einem oder mehreren autonomen Robotern und/oder Fahrzeugen eingesetzt werden, um kontinuierlichen Pflanzenschutz zu ermöglichen und so Probleme frühzeitig zu erkennen und zu beheben.

Durch die vorliegende Erfindung ist prinzipiell auch in einem zertifizierten Bioanbau der Einsatz von chemisch-synthetisierten Pflanzenschutzmitteln möglich, indem potenziell kontaminierte Pflanzen durch die Dokumentation jedes einzelnen Tropfens transparent erkennbar sind. Die Digitalisierung im Pflanzenbau soll Endkunden aufschlüsseln, in welcher Entfernung zu Ihrem Produkt (Nutzpflanze), welche Mengen, welcher Substanz, zu welchen Zeitpunkten, bei welchen Umweltbedingungen eingesetzt wurden.

## Patentansprüche

1. Verfahren umfassend die Schritte:
(a) Erzeugen einer ersten Bildaufnahme von einem Zielobjekt,
(b) Identifizieren des Zielobjekts auf Basis der ersten Bildaufnahme,
(c) Ermitteln einer Zielregion auf Basis der ersten Bildaufnahme und/oder auf Basis einer zweiten Bildaufnahme,
(d) Applizieren einer Menge eines Pflanzenschutzmittels auf die Zielregion mit Hilfe einer Dosiereinheit,
(e) Erzeugen einer dritten Bildaufnahme, wobei die dritte Bildaufnahme das auf die Zielregion applizierte Pflanzenschutzmittel zeigt,
(f) Erzeugen eines Datensatzes umfassend
a. die erste und/oder die zweite Bildaufnahme,
b. eine Information über das ermittelte Zielobjekt, und
c. die dritte Bildaufnahme,
(g) Ausgeben und/oder Speichern des Datensatzes und/oder Übermitteln des Datensatzes an ein Computersystem.

2. Verfahren gemäß Anspruch 1, wobei in Schritt (f) zusätzlich die Menge des applizierten Pflanzenschutzmittels umfasst ist.

3. Vorrichtung umfassend,
- eine Steuer- und Recheneinheit,
- mindestens eine Bildaufnahmeeinheit,
- eine Dosiereinheit, und
- einen Datenspeicher und/oder eine Sendeeinheit,
wobei die Steuer- und Recheneinheit konfiguriert ist,
- von der mindestens einen Bildaufnahmeeinheit eine erste Bildaufnahme zu empfangen,
- ein Zielobjekt in der ersten Bildaufnahme zu identifizieren,
- optional eine zweite Bildaufnahme von der mindestens einen Bildaufnahmeeinheit zu empfangen,
- eine Zielregion auf Basis der ersten und/oder zweiten Bildaufnahme zu ermitteln,
- die Dosiereinheit zu veranlassen, eine Menge eines Pflanzenschutzmittels auf die Zielregion zu applizieren,
- die mindestens eine Bildaufnahmeeinheit zu veranlassen, eine dritte Bildaufnahme zu erzeugen, wobei die dritte Bildaufnahme das auf die Zielregion applizierte Pflanzenschutzmittel zeigt,
- einen Datensatz zu erzeugen, wobei der Datensatz
∘ die erste und/oder die zweite Bildaufnahme,
∘ eine Information über das ermittelte Zielobjekt, und
∘ die zweite Bildaufnahme
umfasst, und
- den Datensatz in dem Datenspeicher zu speichern und/oder die Sendeeinheit zu veranlassen, den Datensatz an ein Computersystem zu übermitteln.

4. Vorrichtung gemäß Anspruch 3, wobei die Dosiereinheit einen Vorratsbehälter, eine Düse, ein Präzisionsventil und ein Mikroreservoir enthält, das geeignet ist, Tropfen mit einem Volumen von weniger als 100 nL zu applizieren.
